# EUROPEAN PATENT SPECIFICATION

(11) **EP 2 821 884 B1**
(45) Date of publication and mention of the grant of the patent: **05.09.2018**
(21) Application number: 13174523.4
(22) Date of filing: 01.07.2013
(51) Int. Cl.: G06F 3/01

(54) **Cabin management system having a three-dimensional operating panel**
Kabinenmanagementsystem mit dreidimensionalem Bedienfeld
Système de gestion de cabine possédant un panneau fonctionnant en trois dimensions

(43) Date of publication of application: 07.01.2015
(73) Proprietor: Airbus Operations GmbH, 21129 Hamburg (DE)
(72) Inventor: Fischer, Wolfgang, 21635 Jork (DE); Mahn, Stefan, 21614 Buxtehude (DE); Sobeagio, Dennis-Indrawan, 22083 Hamburg (DE)
(74) Representative: LKGLOBAL Lorenz & Kopf PartG mbB Patentanwälte

(56) References cited:
- EP-A1- 2 372 512
- WO-A1-02/063601
- WO-A1-2011/042351
- US-A1- 2006 012 675
- US-A1- 2007 132 721
- US-A1- 2009 076 766

## Description

### Technical Field

The invention relates to a cabin management system (CMS) for an aircraft, particularly to a cabin intercommunication and data system (CIDS), and to an aircraft with such a cabin management system.

### Background of the invention

A cabin management system in an aircraft needs to be operated during a flight or when preparing the aircraft for a flight by an aircraft crew via an operating panel. In case of the CIDS these are the flight attendant panel (FAP) or the additional attendant panel (AAP). The cabin management system enables for example controlling of parameters of the aircraft like cabin temperature, cabin illumination, or controlling of any technical instruments like for example multimedia devices for presenting multimedia content. Further, the cabin intercommunication data system may be used for controlling the technical parameters of devices or apparatus of the aircraft.

With an increasing number of systems to be controlled on board of an aircraft, the cabin intercommunication data system and the according controlling instruments or interfaces may include more and more functionalities. In this case, the number of control elements needed for controlling the cabin management system may also increase.

EP 2 372 512 A1 describes a vehicle user interface unit for a vehicle electronic device which comprises a 3D display unit with a display which is adapted to display an image which is perceived by a user as a virtual 3D image at least partially located in front of the display. A display control unit is adapted to control the generation of the 3D image by the display unit. An input unit is adapted to detect the location of a user controlled object and to interpret the detection of a predefined variation of the user-controlled object as a selection of one interaction element comprised in the virtual 3D image.

### Summary of the invention

It may be seen as the objective technical problem of the invention to provide a cabin management system for controlling or operating a multitude of functional units, which is adapted to enable an increased number of functionalities of the functional units without increased number of control elements or without increased space requirement for the CMS or for an operating panel in an aircraft.

This problem is solved by the subject matter of the independent claims. Further embodiments are depicted in the dependent claims and in the following description.

According to a first aspect of the invention, a cabin management system for an aircraft is provided, the Cabin Intercommunication and Data System (CIDS). The CIDS comprises a functional unit, a control unit for controlling the functional unit, and a display arrangement for displaying a three-dimensional virtual scenario, which display arrangement is adapted for transmitting control commands to the control unit for operating the functional unit. The display arrangement comprises a display element and a position detection unit for detecting the position of an input element, which input element is adapted for interacting with the three-dimensional virtual scenario. The display element is adapted for displaying at least one three-dimensional virtual object. The position detection unit is interconnected with the control unit as to transmit the position of the input element to the control unit. The control unit is adapted to compare the position of the input element in the three-dimensional virtual scenario with the virtual position of the three-dimensional virtual object. The control unit is further adapted to provide a control command to the CIDS which control command is assigned to a status of a three-dimensional virtual object which is selected by the input element.

The functional unit may be a technical device to be controlled like the light system, the ventilation system, the air condition, devices of the galley unit, multimedia devices, or the like. The cabin intercommunication data system may comprise a multitude of functional units.

Thus, the display arrangement is a modular and easily changeable or configurable control instrument or control interface for operating the cabin intercommunication data system, as the status of the three-dimensional virtual object is used for submitting a command according to the said status to a functional unit of the cabin intercommunication data system.

The display arrangement may be adapted to first allow selection of the functional unit to be operated and second to select a command to be submitted to the said selected functional unit.

Using a three-dimensional virtual scenario for displaying the three-dimensional virtual objects used for controlling the functional units of the cabin intercommunication data system may improve the clarity of the visualization and may provide an intuitive usability to the operator of the display arrangement and of the cabin management system. Further, the display arrangement does not need to be added on additional buttons or control panels when adding new functional units to the cabin intercommunication data system, which additional control elements may lead to an increased space requirement. This may not be desirable due to foreseeable integration problems for the operating panel as well as an increased complexity of the user interface or operating panel. Another side effect may be an increased weight of the operating panel and therefore also of the aircraft, which may not be desirable due to aspects of fuel and energy savings.

The display element may be a screen which is adapted for displaying a three-dimensional scenario, in particular a virtual three-dimensional scenario, which means that the three-dimensional impression arises when being viewed by a human operator.

Interacting with a three-dimensional virtual object may in particular mean to select, to move, ,to rotate or to modify in another way one of the three-dimensional virtual objects. The control unit may be configured to recognise operations or a movement of the input element and to control the display arrangement accordingly as to display a three-dimensional virtual object in accordance with the movement of the input element or as to change the position or the orientation of an according three-dimensional virtual object.

The three-dimensional virtual objects may be seen as the control elements for the functional units of the cabin management system. Thus, when interacting with the three-dimensional virtual objects in the three-dimensional virtual scenario, the functional units are being controlled or operated accordingly.

The three-dimensional virtual objects may in particular be spatial geometrical shapes like cubes. Any surface of the cube may correspond to a determined operation of a functional unit, for example increasing or decreasing the temperature or inserting a defined value of a temperature to take on in an aircraft cabin. When rotating the three-dimensional virtual object, another lateral surface may point towards the operator of the display arrangement which another lateral surface corresponds to another parameter or function of the cabin management system.

However, the display arrangement as described above and hereinafter may also be implemented to display a multitude of three-dimensional virtual objects.

According to an embodiment of the invention, the status of the three-dimensional virtual object is defined by a virtual position of the three-dimensional virtual object in the three-dimensional virtual scenario.

A three-dimensional virtual object may be moved upwards/downwards or to the left/right, which may cause an according operation like increasing/decreasing the temperature or the intensity of the illumination, whereas moving an object to the left/right may select the region in the aircraft cabin to be influenced by a given operating mode.

According to a further embodiment of the invention, the status of the three-dimensional virtual object is defined by an orientation of the three-dimensional virtual object around a coordinate axis of the three-dimensional virtual scenario.

As written above, the orientation or the surface pointing towards an operator of the display arrangement may define which operation is selected. In case the three-dimensional virtual object is a cube, this geometric shape may be assigned with six operation modes or function, each corresponding to one of the six surfaces of the cube. When rotating the cube in the three-dimensional virtual scenario, the surface pointing towards the operator defines the status, i.e. the selected operation.

When referring to the direction pointing towards the operator of the display arrangement, the direction away from the surface of the display element is meant.

According to a further embodiment of the invention, the display element is adapted to display a status frame, wherein the display arrangement is adapted to change the virtual position of the three-dimensional virtual object according to a movement of the input element and wherein the status of the three-dimensional virtual object is defined by the position of the three-dimensional virtual object with respect to the status frame.

In other words, the status frame may be an immobile and an immovable object within the three-dimensional virtual scenario and the three-dimensional virtual objects may be moved with respect to the status frame. When moving one of the three-dimensional virtual objects within the contour or shape of the status frame, the said three-dimensional virtual object is the selected out and its status is interpreted as a command for submitting to the cabin management system.

The three-dimensional virtual objects may be moved within the contour of the status frame by sliding the input element and move an attached three-dimensional virtual object into the contours of the status frame.

According to a further embodiment of the invention, the three-dimensional virtual object has a first status and a second status. The control unit changes the status of the three-dimensional virtual object being in the first status to the second status when the virtual position of the three-dimensional virtual object coincides with the position of the input element.

According to a further embodiment of the invention, the control unit changes the status of the three-dimensional virtual object being in the second status to the first status when the virtual position of the three-dimensional virtual object coincides with the position of the input element.

In other words, the three-dimensional virtual object may implement the functionality of a switch having two states: on (first status) and off (second status). When being in on-status, the three-dimensional virtual object may only be brought to the off-status and vice versa. The operation depends on the status the three-dimensional virtual object is in, wherein the same operation of the input element may initiate the changing of the status. This operation for changing the status of the three-dimensional virtual object may for example be a movement of the input element towards the surface of the three-dimensional virtual object which is pointing toward the operator.

The display arrangement detects this movement of the input element towards the three-dimensional virtual object as the control unit detects the physical position of the input element and further knows the virtual position of the three-dimensional virtual objects. When a position of a surface of one of the three-dimensional virtual objects and the physical position of the input element coincide, the status of the according three-dimensional virtual object will change. This operation described above corresponds to switching a switch on and off.

According to a further embodiment of the invention, the control unit is adapted for controlling at least one parameter of the list of parameters of the cabin intercommunication data system consisting of illumination intensity, ventilation intensity, video services, audio services, and temperature in the cabin or a part of the cabin of the aircraft.

According to a further embodiment of the invention, the position detection unit comprises a camera system for detecting the position of the input element.

The camera system may comprise at least two or more cameras as to receive different pictures of the space in front of the display element, such that the spatial position of the input element in the three-dimensional virtual scenario, i.e. in front of the display element and with respect to the display element, may be determined as to compare this position of the input element with the calculated virtual position of the three-dimensional virtual objects.

According to a further embodiment of the invention, the position detection unit comprises an ultrasonic sensor system for detecting the position of the input element.

The ultrasonic sensor system may according to the camera system comprise at least two or more ultrasonic sensors which may be adapted to receive an audio signal reflected from the surface of the input element as to determine the position of the input element.

The ultrasonic sensor system and the camera system may be used simultaneously, such that an accuracy of the position determination may be increased.

According to a further embodiment of the invention, the position detection unit comprises a touch element for detecting the position of the input element when touching a surface of the touch screen with the input element.

The touch element may in particular be a movable touch screen, which touch screen enables a movement of the input element on its surface and wherein that one of the three-dimensional virtual objects is selected which is closest to the position of the input element on the touch element.

According to a further embodiment of the invention, the touch element is arranged within the three-dimensional virtual scenario spaced apart from the display element and in particular in front of the display element, i.e. between the display element and an operator.

Thus, a movement of the input element along the surface of the touch element is enabled, wherein the plane of movement is arranged within the three-dimensional virtual scenario in front of the display element. The surface of the touch element may be planar or curved.

The touch element may be movable or rotatable within the space of the three-dimensional virtual scenario such that the position of the touch element may be adapted as to coincide with the surface of one or more three-dimensional virtual objects, which three-dimensional virtual objects may then be selected intuitively by touching the surface of the touch element with the input element.

According to a further embodiment of the invention, the touch element is a transparent touch element.

According to a further embodiment of the invention, the touch element comprises a force feedback unit which is adapted to exert a force onto the touch element when the input element selects a three-dimensional virtual object in the three-dimensional virtual scenario. The force feedback may be a slight vibration signal which is created using an electric motor or a piezoelectric element, for example.

Thus, the operator may see the complete three-dimensional virtual scenario and in particular the three-dimensional virtual objects behind the touch element. The touch element may be a capacitive touch screen built of glass or plastics.

According to a further embodiment of the invention, the display element is an autostereoscopic display.

This means that at least two different images are provided, each one for any eye of one or more operators, such that the respective eyes of each operator see different images and the operator gets the impression of seeing a three-dimensional scenario. Therefore, the operator may take a predefined position or angle of view with respect to the display element.

According to a further embodiment of the invention, the position detection unit is adapted for detecting the position of an arm of an operator of the display arrangement.

In other words, the arm or finger of the operator may function as the input element for selecting and controlling the three-dimensional virtual objects in the three-dimensional virtual scenario.

In an alternative embodiment, the input element may be a stick or a pen. The operator may wear a glove for at least one finger on at least one of his or her hand, wherein the position detection unit is adapted for recognising the spatial position of the glove or a defined point of the glove. The surface of the glove may at least partially comprise a coating for enabling or improving detection by the position detection unit, which coating may be adapted to reflect ultrasonic sound or may easily be detected by a camera and an according image processing software. Alternatively, the operator may be equipped with a sticker, a label, or a badge on the finger or skin of the operator's hand as to improve the position detection mechanism.

According to a further aspect of the invention, an aircraft is provided which comprises a display arrangement as described above and hereinafter, wherein the control unit is adapted for controlling the functions of a cabin management system of the aircraft and wherein the display element is a graphical interface for operating the cabin management system.

Thus, the display arrangement as described above and hereinafter enables controlling the cabin management system by the cabin crew intuitively and in an easy manner.

According to a further embodiment, the cabin management system comprises additionally to the display arrangement adapted for displaying a three-dimensional virtual scenario a second display arrangement adapted for displaying a two-dimensional scenario. The second display arrangement may in particular be used by operators who are not able to operate a three-dimensional display, for example an autostereoscopic display.

According to a further embodiment, the display arrangement adapted for displaying a three-dimensional virtual scenario is configured such that the three-dimensional representation of the scenario can be deactivated, for example by means of a physical switch interconnected to the display arrangement or by means of a special gesture.

Below, exemplary embodiments of the invention are described with reference to the drawings.

### Brief description of the drawings

Fig. 1 illustrates a schematic view of a display arrangement of a Cabin Management System according to an exemplary embodiment of the invention.
Fig. 2 illustrates a schematic view of a display arrangement of a Cabin Management System according to a further exemplary embodiment of the invention.
Fig. 3 illustrates a schematic view of a three-dimensional virtual scenario of a display arrangement of a Cabin Management System according to a further exemplary embodiment of the invention.
Fig. 4 illustrates a schematic view of a three-dimensional virtual scenario of a display arrangement of a Cabin Management System according to a further exemplary embodiment of the invention.
Fig. 5 illustrates a schematic view of a three-dimensional virtual scenario of a display arrangement of a Cabin Management System according to a further exemplary embodiment of the invention.
Fig. 6 illustrates a schematic view of a three-dimensional virtual scenario of a display arrangement of a Cabin Management System according to a further exemplary embodiment of the invention.
Fig. 7 illustrates a schematic view of a three-dimensional virtual scenario of a display arrangement of a Cabin Management System according to a further exemplary embodiment of the invention.
Fig. 8 illustrates a schematic view of a three-dimensional virtual scenario of a display arrangement of a Cabin Management System according to a further exemplary embodiment of the invention.
Fig. 9 illustrates a schematic view of a three-dimensional virtual scenario of a display arrangement of a Cabin Management System according to a further exemplary embodiment of the invention.
Fig. 10 illustrates a schematic view of a three-dimensional virtual scenario of a display arrangement of a Cabin Management System according to a further exemplary embodiment of the invention.

The illustrations in the figures are schematic and not to scale. Identical reference sings relate to similar or identical elements.

### Detailed description of embodiments

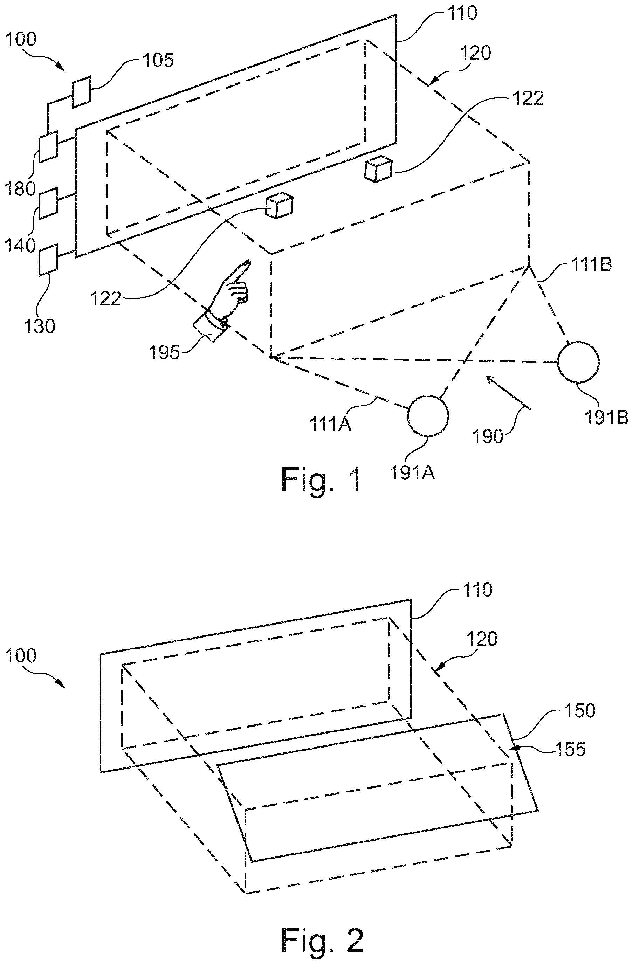

Fig. 1 illustrates a display arrangement 100 with a display element 110, a camera unit 130, an ultrasonic sensor unit 140, and a control unit 180. The control unit 180 is interconnected with the functional unit 105 to be controlled.

The control unit 180 is configured to control the display element and in particular what image to display. Thus, the control unit 180 knows the virtual position of the three-dimensional virtual objects 122 in the space in front of the display element, i.e. in the three-dimensional virtual scenario 120.

The three-dimensional virtual scenario is indicated as a cuboid by dashed lines. Within this cuboid, the three-dimensional virtual objects may be arranged, i.e. the display arrangement is adapted to create the impression of a three-dimensional scenario having in its maximum extent the proportions indicated by the dashed lines.

An operator is watching the three-dimensional virtual scenario as indicated by the position of the left eye 191A and of the right eye 191B in the viewing direction 190. The three-dimensional virtual scenario 120 is thus arranged in between the operator and the surface of the display element 110. In case an autostereoscopic display is used, the left eye 191A receives due to its position a first image from the first angle of view 111A, wherein the right eye 191B receives due to its position different from the position of the left eye a second image from the second angle of view 111B. Thus, a human operator gets the impression of a three-dimensional scenario as the operator's eyes see different images.

It should be noted that the illustrated objects 122 are virtual objects in the virtual scenario 120, wherein the three-dimensional impression of the virtual objects 122 derives from being presented with an autostereoscopic display, for example, to the eyes 191A, 191B of an operator.

The input element 195 is indicated as the operator's arm with extended forefinger. The operator may bring his or her hand within the three-dimensional virtual scenario such that the operator can interact with the three-dimensional virtual object when bringing the finger to the coordinates of one three-dimensional virtual object or onto a surface of one of the three-dimensional virtual objects.

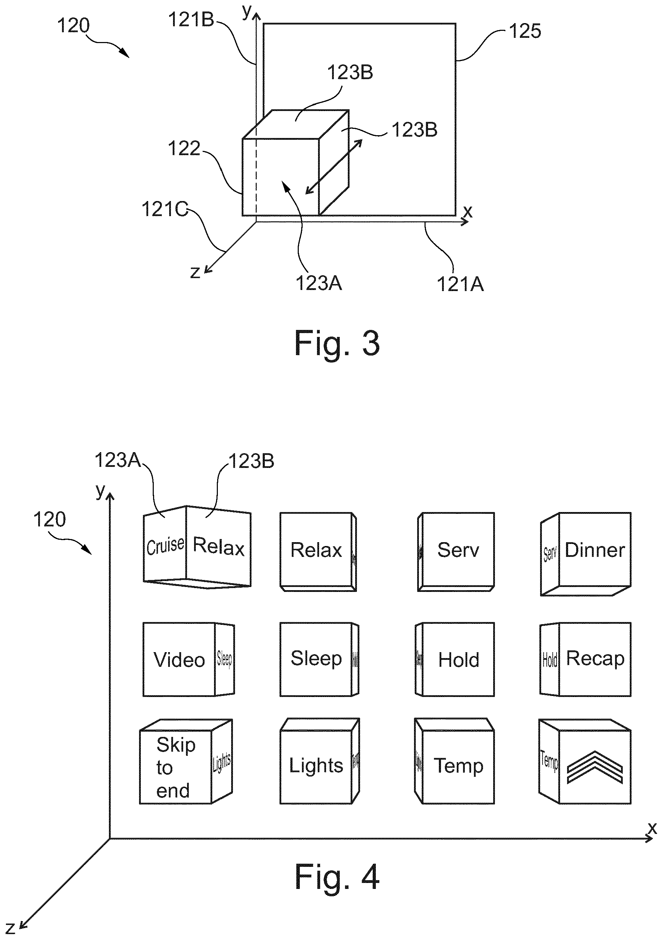

When firstly touching a three-dimensional virtual object, the three-dimensional virtual object may attach to the operator's finger and may be pushed, moved, or rotated as to interact with the display arrangement. The interaction of the user with the three-dimensional virtual objects will be described in more detail in connection with Figs. 3 to 10.

The camera unit 130 and the ultrasonic sensor unit 140 are adapted to detect the position of the operator's finger and to submit the position to the control unit, which is then able to compare the physical position of the input element, i.e. of the finger or in more particular of the fingertip, with the virtual position of the three-dimensional virtual objects. When one of the three-dimensional virtual object is touched by the finger, i.e. their respective positions coincide, or the finger is closer to one three-dimensional virtual object than a predefined threshold value, for example closer than a few mm, for example 2 mm, the respective three-dimensional virtual object is selected for calling a function or submitting a command to the cabin intercommunication data system.

The camera unit 130 and the ultrasonic sensor unit 140 may comprise two or more than two detection elements, i.e. cameras or ultrasonic sensors, respectively, which are arranged at different positions around the display element such that a spatial position of the finger 195 may be detected.

Fig. 2 illustrates a touch element 150 arranged within the three-dimensional virtual scenario 120 in front of the display element. The touch element 150 may be moved or rotated within the three-dimensional virtual scenario. The operator's finger may then be moved along the surface 155 of the touch element 150. In case the touch element is equipped with position detection sensors, no further camera or ultrasonic sensor units for detecting the position of the input element may be needed as the position of the touch element and the position of the input element with respect to the touch element are known.

Fig. 3 illustrates a three-dimensional virtual scenario 120 with a three-dimensional virtual object 122 and the spatial coordinates x, y, and z.

The three-dimensional virtual scenario 120 is spanned by the x-axis 121A, the y-axis 121B, and the z-axis 121C. The three-dimensional virtual object 122 is illustrated as a cube whose surfaces 123A, 123B, 123C are visible from the selected point of view.

The status of the three-dimensional virtual object 122 may be changed by moving the three-dimensional virtual object in a direction perpendicular to a plane 125 spanned by the x-axis and the y-axis, as indicated by the double-headed arrow parallel to the z-axis. The three-dimensional virtual object 122 may be moved by touching the surface 123A and going on moving the input element towards the plane 125.

The plane 125 may in one exemplary embodiment coincide with the physical existing surface of the display element, wherein the surface corresponds to the so called zero parallax.

When changing the status of the three-dimensional virtual object, the control unit may submit an assigned command to the cabin management system, such that an according functional unit is controlled as initiated by the operator.

In an enabled state, which means that the button can be pressed by the operator, a three-dimensional virtual object is in front of the display surface. In case the three-dimensional virtual object is pressed, it will be moved either to a position flat on the display's surface or slightly in front of it. Thus, the operator recognises immediately from the position of the three-dimensional virtual object its status and the status of the assigned function of the cabin intercommunication data system.

Fig. 4 illustrates a three-dimensional virtual scenario 120 with a multitude of three-dimensional virtual objects. The three-dimensional virtual objects may be rotated around a rotational axis parallel to the y-axis, such that four surfaces of each three-dimensional virtual object may be assigned to a command or a function of the cabin intercommunication data system. This is exemplary shown by the three-dimensional virtual object on the top left corner, wherein two surfaces 123A, 123B having different functions are shown.

This mechanism enables providing a multitude of functions on a small display which may lead to considerable savings in space on the display's surface and/or an improved clarity of the human machine interface. The display arrangement as described above and hereinafter provides an intuitive control mechanism for the Cabin Management System.

The surfaces of the three-dimensional virtual objects may comprise a label for indicating the assigned function. The label may be lettering or a sign, as indicated in the downright corner with the double-arrow for increasing the temperature.

The position detection unit may be adapted to recognise gestures which indicate a rotational movement of a three-dimensional virtual object which is closest to the operator's hand. After rotating one three-dimensional virtual object in a desired position, the surface pointing towards the operator may be pushed in the three-dimensional virtual scenario as to activate the assigned function.

Additionally to the rotation around an axis parallel to the y-axis, a rotation around an axis parallel to the x-axis may be implemented which leads to the result that six surfaces of the three-dimensional virtual object shaped as a cube instead of four when providing a single rotational axis only can be used for assigning functions or commands.

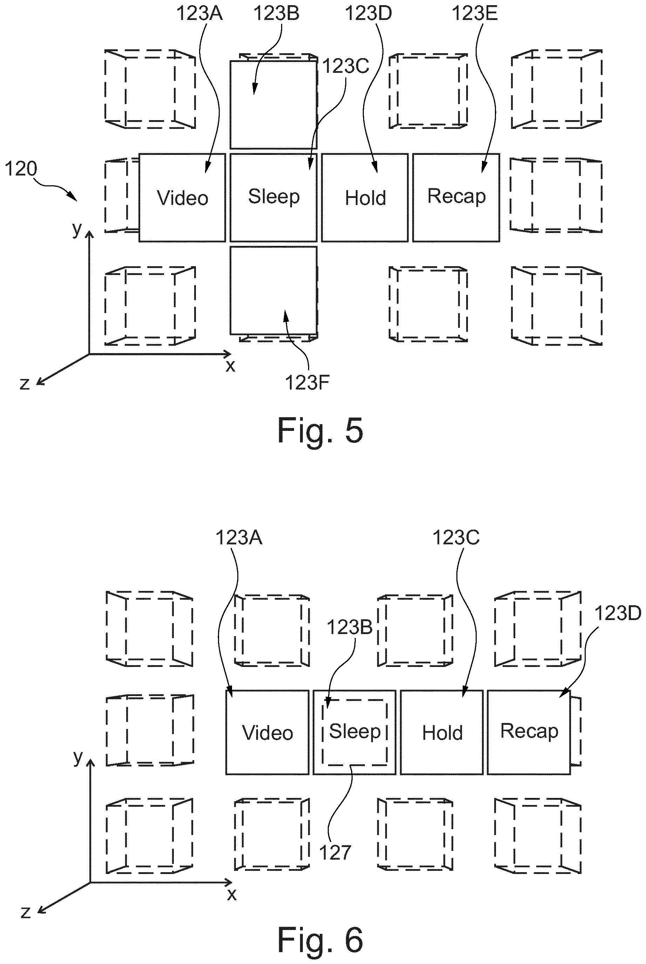

Fig. 5 illustrates an alternative method for choosing a function of the three-dimensional virtual object. The three-dimensional virtual object is unfolded such that each surface is visible for the operator who can now select any one of the provided surfaces, i.e. of the provided functions. The three-dimensional virtual object may unfold when being firstly selected by the operator and may fold again when the operator touches one of the three-dimensional virtual objects in the background or one of the surfaces not assigned to a function or command. Alternatively, the unfolded three-dimensional virtual object may fold after a defined time of inactivity, for example 3 seconds.

The method shown in Fig. 5 enables the operator to get a better overview of all the functions provided by the selected three-dimensional virtual object.

Fig. 6 illustrates a similar selection method as shown in Fig. 5 with the difference that in Fig. 5 a function is selected by pressing the desired surface, wherein in Fig. 6 the unfolded three-dimensional virtual object is moved such that the desired function is placed within a status frame 127. The frame 127 may in one exemplary embodiment be a virtual frame which is adapted to accentuate or emphasize the selected function. In Fig. 6, the illumination program for "sleep" is selected. The unfolded surfaces 123A, 123B, 123C, and 123D arranged side by side can be moved by sliding the three-dimensional virtual object with the input element to the left or to the right in order to place the desired function within the status frame 127. The desired function may be initiated after a time of inactivity of 3 seconds. Alternatively, the unfolded three-dimensional virtual object may be folded as to call no one of the functions of the unfolded surfaces by touching beside the unfolded three-dimensional virtual object.

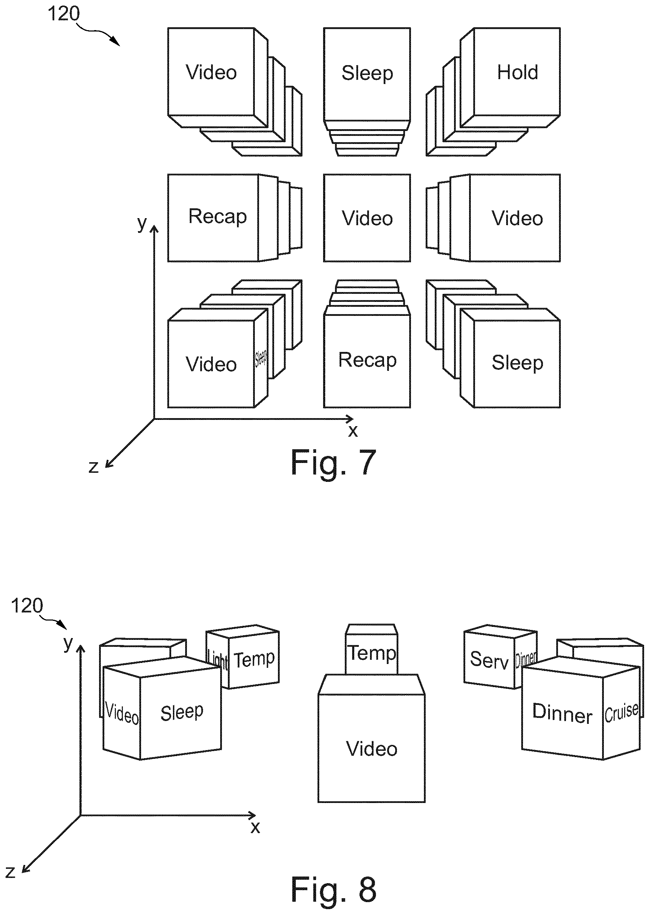

Fig. 7 illustrates an arrangement variant of three-dimensional virtual objects in the three-dimensional virtual scenario 120. There are multiple three-dimensional virtual objects arranged side by side and one behind the other. Thus, an even more increased number of functions may be accommodated on a small display element.

When selecting a function, first the according three-dimensional virtual object needs to be selected which may happen by rotating the complete arrangement of three-dimensional virtual objects around one of the coordinate axes x, y, or z. Then, the desired three-dimensional virtual object may be selected as indicated in one of the Figs. 4 to 6 as to select one of the functions of the selected three-dimensional virtual object.

As to distinguish between the two possible rotational movements relating to rotating the complete virtual scenario on one hand and rotating a single virtual object on the other hand, this may occur by distinguishing between movement of the operator's hand (in this case the complete virtual scenario may be moved) or movement of one finger only (in this case only one selected virtual object may be moved).

In the embodiment shown in Fig. 7, only the three-dimensional virtual objects on the front, i.e. pointing towards the operator, may be selectable. Thus, the three-dimensional virtual object in the centre may not be selectable or may not exist, as this three-dimensional virtual object is covered or obscured in any case, indifferent which rows and columns of the three-dimensional virtual object stack points towards the operator. In other words, the three-dimensional virtual objects may build up a three-dimensional shape, wherein the three-dimensional virtual object may in this case build only the surfaces of the said three-dimensional shape of three-dimensional virtual objects.

It may occur that three-dimensional virtual objects arranged in one of the corners of the cube formed by the three-dimensional virtual objects belong to different functions and can be operated from various different faces at the same time. This means if the three-dimensional virtual object in a corner has two states and is moving in the z-axis on each side of the cube arrangement, the position may change not only into one, but a combination of different directions at the same time after longer operation by the operator. This behaviour may not be intuitively and in case only a two state solution per face of the three-dimensional virtual object is desired, an additional function may be implemented. This additional function includes that the three-dimensional virtual object shall stay at the same position, but still indicates its actual status with an amended surface condition. The surface of the three-dimensional virtual object may therefore be impacted in a way that it sags and a concave notch is formed in the negative direction of the z-axis, away from the operator. In return, it is also possible that the notch is formed outwards, i.e. convex, in the positive direction of the z-axis, towards the operator.

Fig. 8 illustrates a variant of arranging the three-dimensional virtual objects in the three-dimensional virtual scenario 120 which may overcome a drawback of other variants that the obscured three-dimensional virtual objects are invisible for the operator and the operator may need to look for a desired function or is required to know which three-dimensional virtual object accommodates the function looked for.

The three-dimensional virtual objects are arranged circular, wherein the circle is slightly inclined or skew to any one of the coordinate axes x, y, z. Thus, the surfaces of the three-dimensional virtual objects in the rear or background may also be seen by the operator who can see which functions the respective three-dimensional virtual objects accommodate.

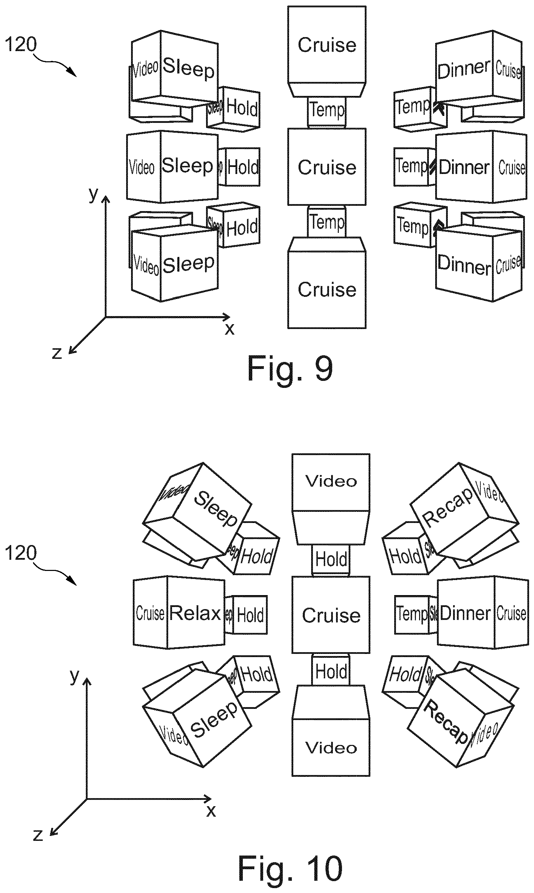

Fig. 9 expands the three-dimensional virtual scenario shown in Fig. 8 as there are three circles of three-dimensional virtual objects stacked above each other.

The three-dimensional virtual objects may be rotated around an axis of the circles build up by the positioning of the three-dimensional virtual objects, wherein each of the three-dimensional virtual objects may be selected for selecting one of its functions as indicated in Figs. 4 to 6.

Fig. 10 illustrates a multitude of three-dimensional virtual objects arranged in the shape of a ball, which ball may be freely rotated with gesture control around any one of the coordinate axes x, y, or z for selecting a three-dimensional virtual object and an according surface or function assigned to that surface of the three-dimensional virtual object.

## Claims

1. Cabin management system for an aircraft comprising:
a functional unit (105);
a control unit (180) for controlling the functional unit; and
a display arrangement (100) for displaying a three-dimensional virtual scenario (120), which display arrangement is adapted for transmitting control commands to the control unit (180) for operating the functional unit;
wherein the display arrangement comprises:
a display element (110); and
a position detection unit (130, 140, 150) for detecting the position of an input element (195) of an operator, which input element is adapted for interacting with the three-dimensional virtual scenario;
wherein the display element is adapted for displaying a three-dimensional virtual object (122);
wherein the position detection unit (130, 140, 150) is interconnected with the control unit to transmit the position of the input element to the control unit;
wherein the control unit (180) is adapted to compare the position of the input element (195) in the three-dimensional virtual scenario with the virtual position of the three-dimensional virtual object;
wherein the control unit (180) is adapted to provide a control command to the functional unit which control command is assigned to a status of the three-dimensional virtual object which is selected by the input element,
**characterized in that** the position detection unit comprises a transparent touch element (150) for detecting the position of the input element when touching a surface of the touch element with the input element; and wherein the touch element is arranged within the three-dimensional virtual scenario spaced apart from the display element (110).

2. Cabin management system according to claim 1,
wherein the status of the three-dimensional virtual object is defined by a virtual position of the three-dimensional virtual object in the three-dimensional virtual scenario.

3. Cabin management system according to claim 1 or 2,
wherein the status of the three-dimensional virtual object is defined by an orientation of the three-dimensional virtual object around a coordinate axis (121A, 121B, 121C) of the three-dimensional virtual scenario.

4. Cabin management system according to any one of the preceding claims,
wherein the display element is adapted to display a status frame (127);
wherein the display arrangement is adapted to change the virtual position of the three-dimensional virtual object according to a movement of the input element;
wherein the status of the three-dimensional virtual object is defined by the position of the three-dimensional virtual object with respect to the status frame.

5. Cabin management system according to any one of the preceding claims,
wherein the three-dimensional virtual object has a first status and a second status;
wherein the control unit changes the status of the three-dimensional virtual object being in the first status to the second status when the virtual position of the three-dimensional virtual object coincides with the position of the input element.

6. Cabin management system according to claim 5,
wherein the control unit changes the status of the three-dimensional virtual object being in the second status to the first status when the virtual position of the three-dimensional virtual object coincides with the position of the input element.

7. Cabin management system according to any one of the preceding claims,
wherein the control unit is adapted for controlling at least one parameter of the list of parameters of the CMS consisting of illumination intensity, ventilation intensity, video services, audio services, and temperature in the cabin or a part of the cabin of the aircraft.

8. Cabin management system according to any one of the preceding claims,
wherein the position detection unit comprises a camera system (130) for detecting the position of the input element.

9. Cabin management system according to any one of the preceding claims,
wherein the position detection unit comprises an ultrasonic sensor system (140) for detecting the position of the input element.

10. Cabin management system according to any one of the preceding claims,
wherein the display element is an autostereoscopic display.

11. Cabin management system according to any one of the preceding claims,
wherein the position detection unit is adapted for detecting the position of an arm of an operator of the display arrangement.

12. Aircraft comprising a cabin management system according to any one of the preceding claims.

## Patentansprüche

1. Kabinenmanagementsystem für ein Luftfahrzeug, aufweisend:
eine Funktionseinheit (105);
eine Steuereinheit (180) zum Steuern der Funktionseinheit; und
eine Anzeigeanordnung (100) zum Anzeigen eines dreidimensionalen virtuellen Szenarios (120), wobei die Anzeigeanordnung eingerichtet ist zum Übertragen von Steuerbefehlen an die Steuereinheit (180) zum Betreiben der Funktionseinheit;
wobei die Anzeigeanordnung aufweist:
ein Anzeigeelement (110); und
eine Positionserfassungseinheit (130, 140, 150) zum Erfassen der Position eines Eingabeelements (195) eines Bedieners, wobei das Eingabeelement zum Interagieren mit dem dreidimensionalen virtuellen Szenario eingerichtet ist;
wobei das Anzeigeelement eingerichtet ist zum Anzeigen eines dreidimensionalen virtuellen Objekts (122);
wobei die Positionserfassungseinheit (130, 140, 150) mit der Steuereinheit verbunden ist, um die Position des Eingabeelements an die Steuereinheit zu übertragen;
wobei die Steuereinheit (180) eingerichtet ist, um die Position des Eingabeelements (195) in dem dreidimensionalen virtuellen Szenario mit der virtuellen Position des dreidimensionalen virtuellen Objekts zu vergleichen;
wobei die Steuereinheit (180) eingerichtet ist, um einen Steuerbefehl für die Funktionseinheit zu bereitzustellen, wobei der Steuerbefehl einem Status des dreidimensionalen virtuellen Objekts zugewiesen ist, der durch das Eingabeelement ausgewählt wird,
**dadurch gekennzeichnet, dass**
die Positionserfassungseinheit ein transparentes Berührungselement (150) aufweist zum Erfassen der Position des Eingabeelements, wenn eine Oberfläche des Berührungselements mit dem Eingabeelement berührt wird; und wobei das Berührungselement in dem dreidimensionalen virtuellen Scenario beabstandet von dem Anzeigeelement (110) angeordnet ist.

2. Kabinenmanagementsystem nach Anspruch 1,
wobei der Status des dreidimensionalen virtuellen Objekts durch eine virtuelle Position des dreidimensionalen virtuellen Objekts in dem dreidimensionalen virtuellen Szenario definiert ist.

3. Kabinenmanagementsystem nach Anspruch 1 oder 2,
wobei der Status des dreidimensionalen virtuellen Objekts durch eine Orientierung des dreidimensionalen virtuellen Objekts um eine Koordinatenachse (121A, 121B, 121C) des dreidimensionalen virtuellen Szenarios definiert ist.

4. Kabinenmanagementsystem nach einem der vorhergehenden Ansprüche,
wobei das Anzeigeelement eingerichtet ist, um einen Status-Frame (127) anzuzeigen;
wobei die Anzeigeanordnung eingerichtet ist, um die virtuelle Position des dreidimensionalen virtuellen Objekts gemäß einer Bewegung des Eingabeelements zu ändern;
wobei der Status des dreidimensionalen virtuellen Objekts durch die Position des dreidimensionalen virtuellen Objekts in Bezug auf den Status-Frame definiert ist.

5. Kabinenmanagementsystem nach einem der vorhergehenden Ansprüche,
wobei das dreidimensionale virtuelle Objekt einen ersten Status und einen zweiten Status aufweist;
wobei die Steuereinheit den Status des dreidimensionalen virtuellen Objekts, das sich in dem ersten Status befindet, in den zweiten Status ändert, wenn die virtuelle Position des dreidimensionalen virtuellen Objekts mit der Position des Eingabeelements übereinstimmt.

6. Kabinenmanagementsystem nach Anspruch 5,
wobei die Steuereinheit den Status des dreidimensionalen virtuellen Objekts, das sich in dem zweiten Status befindet, in den ersten Status ändert, wenn die virtuelle Position des dreidimensionalen virtuellen Objekts mit der Position des Eingabeelements übereinstimmt.

7. Kabinenmanagementsystem nach einem der vorhergehenden Ansprüche,
wobei die Steuereinheit zum Steuern mindestens eines Parameters aus der Liste von Parametern des CMS ausgebildet ist, bestehend aus Beleuchtungsintensität, Belüftungsintensität, Videodiensten, Audiodiensten und Temperatur in der Kabine oder einem Teil der Kabine des Luftfahrzeugs.

8. Kabinenmanagementsystem nach einem der vorhergehenden Ansprüche,
wobei die Positionserfassungseinheit ein Kamerasystem (130) zum Erfassen der Position des Eingabeelements aufweist.

9. Kabinenmanagementsystem nach einem der vorhergehenden Ansprüche,
wobei die Positionserfassungseinheit ein Ultraschallsensorsystem (140) zum Erfassen der Position des Eingabeelements aufweist.

10. Kabinenmanagementsystem nach einem der vorhergehenden Ansprüche,
wobei das Anzeigeelement eine autostereoskopische Anzeige ist.

11. Kabinenmanagementsystem nach einem der vorhergehenden Ansprüche,
wobei die Positionserfassungseinheit zum Erfassen der Position eines Arms eines Bedieners der Anzeigeanordnung eingerichtet ist.

12. Luftfahrzeug mit einem Kabinenmanagementsystem nach einem der vorhergehenden Ansprüche.

## Revendications

1. Système de gestion de cabine pour un aéronef comprenant:
une unité fonctionnelle (105);
une unité de commande (180) pour commander l'unité fonctionnelle; et
un agencement d'affichage (100) pour afficher un scénario virtuel tridimensionnel (120), lequel agencement d'affichage est adapté pour transmettre des commandes de contrôle à l'unité de commande (180) pour faire fonctionner l'unité fonctionnelle;
dans lequel l'agencement d'affichage comprend:
un élément d'affichage (110); et
une unité de détection de position (130, 140, 150) pour détecter la position d'un élément d'entrée (195) d'un opérateur, lequel élément d'entrée est adapté pour interagir avec le scénario virtuel tridimensionnel;
dans lequel l'élément d'affichage est adapté pour afficher un objet virtuel (120) à trois dimensions;
dans lequel l'unité de détection de position (130, 140, 150) est interconnectée avec l'unité de commande pour transmettre la position de l'élément d'entrée à l'unité de commande;
dans lequel l'unité de commande (180) est adaptée pour comparer la position de l'élément d'entrée (195) dans le scénario virtuel tridimensionnel avec la position virtuelle de l'objet virtuel tridimensionnel;
dans lequel l'unité de commande (180) est adaptée pour fournir une commande de contrôle à l'unité fonctionnelle, laquelle commande de contrôle est affectée à un état de l'objet virtuel à trois dimensions qui est sélectionné par l'élément d'entrée,
**caractérisé en ce que** l'unité de détection de position comprend un élément tactile transparent (150) pour détecter la position de l'élément d'entrée lorsqu'il touche une surface de l'élément tactile avec l'élément d'entrée; et dans lequel l'élément tactile est agencé dans le scénario virtuel tridimensionnel espacé de l'élément d'affichage (110).

2. Système de gestion de cabine selon la revendication 1,
dans lequel l'état de l'objet virtuel tridimensionnel est défini par une position virtuelle de l'objet virtuel tridimensionnel dans le scénario virtuel tridimensionnel.

3. Système de gestion de cabine selon la revendication 1 ou 2,
dans lequel l'état de l'objet virtuel tridimensionnel est défini par une orientation de l'objet virtuel tridimensionnel autour d'un axe de coordonnées (121A, 121B, 121C) du scénario virtuel tridimensionnel.

4. Système de gestion de cabine selon l'une quelconque des revendications précédentes,
dans lequel l'élément d'affichage est adapté pour afficher une trame d'état (127);
dans lequel l'agencement d'affichage est adapté pour changer la position virtuelle de l'objet virtuel tridimensionnel en fonction d'un mouvement de l'élément d'entrée;
dans lequel l'état de l'objet virtuel tridimensionnel est défini par la position de l'objet virtuel tridimensionnel par rapport à la trame d'état.

5. Système de gestion de cabine selon l'une quelconque des revendications précédentes,
dans lequel l'objet virtuel tridimensionnel a un premier état et un second état;
dans lequel l'unité de commande change l'état de l'objet virtuel tridimensionnel étant dans le premier état au second état lorsque la position virtuelle de l'objet virtuel tridimensionnel coïncide avec la position de l'élément d'entrée.

6. Système de gestion de cabine selon la revendication 5,
dans lequel l'unité de commande change l'état de l'objet virtuel tridimensionnel étant dans le deuxième état au premier état lorsque la position virtuelle de l'objet virtuel tridimensionnel coïncide avec la position de l'élément d'entrée.

7. Système de gestion de cabine selon l'une quelconque des revendications précédentes,
dans lequel l'unité de commande est adaptée pour contrôler au moins un paramètre de la liste de paramètres du CMS, comprenant l'intensité d'éclairage, l'intensité de ventilation, les services vidéo, les services audio et la température dans la cabine ou une partie de la cabine de l'aéronef.

8. Système de gestion de cabine selon l'une quelconque des revendications précédentes,
dans lequel l'unité de détection de position comprend un système de caméra (130) pour détecter la position de l'élément d'entrée.

9. Système de gestion de cabine selon l'une quelconque des revendications précédentes,
dans lequel l'unité de détection de position comprend un système de détection à ultrasons (140) pour détecter la position de l'élément d'entrée.

10. Système de gestion de cabine selon l'une quelconque des revendications précédentes,
dans lequel l'élément d'affichage est un affichage autostéréoscopique.

11. Système de gestion de cabine selon l'une quelconque des revendications précédentes,
dans lequel l'unité de détection de position est adaptée pour détecter la position d'un bras d'un opérateur de l'agencement d'affichage.

12. Aéronef comprenant un système de gestion de cabine selon l'une quelconque des revendications précédentes.
